(19)

Europäisches
Patentamt
European
Patent Office
Office européen
des brevets

(11) **EP 2 922 300 A1**

(12) **EUROPEAN PATENT APPLICATION**
published in accordance with Art. 153(4) EPC

(43) Date of publication:
**23.09.2015 Bulletin 2015/39**

(21) Application number: **13855936.4**

(22) Date of filing: **14.11.2013**

(51) Int Cl.:
*H04N 21/238* (2011.01)   *H04N 21/236* (2011.01)
*H04N 21/24* (2011.01)

(86) International application number:
**PCT/JP2013/080762**

(87) International publication number:
**WO 2014/077307 (22.05.2014 Gazette 2014/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.11.2012   JP 2012250887**

(71) Applicant: **NEC Corporation
Tokyo 108-8001 (JP)**

(72) Inventor: **OZAWA, Kazunori
Tokyo 108-8001 (JP)**

(74) Representative: **Betten & Resch
Patent- und Rechtsanwälte PartGmbB
Theatinerstraße 8
(Fünf Höfe)
80333 München (DE)**

(54) **SERVER DEVICE, TERMINAL, THIN CLIENT SYSTEM, SCREEN TRANSMISSION METHOD AND PROGRAM**

(57)    A server apparatus comprises: a virtual client unit that generates screen data by executing a drawing command(s) using an application software; an image encoding unit that performs compression encoding of the screen data; a drawing command encoding unit that performs compression encoding of the drawing command(s); a bandwidth measurement unit that measures a bandwidth of a network based on a response packet from a terminal connected to the server apparatus via the network for a packet transmitted to the terminal; a selection unit that selects which of the compression encoded screen data or the compression encoded drawing command(s) is to be transmitted to the terminal in accordance with the measured bandwidth; and a packet transceiver unit that transmits to the terminal the selected one of the compression encoded screen data or the compression encoded drawing command(s). Delay in screen display at a client terminal is prevented in a case of fluctuation in network bandwidth between a thin client server apparatus and a terminal.

FIG. 2

EP 2 922 300 A1

**Description**

FIELD

(CROSS-REFERENCE TO RELATED APPLICATIONS)

The present application claims priority from Japanese Patent Application No. 2012-250887 (filed on November 15, 2012), the content of which is hereby incorporated in its entirety by reference into this specification. The present invention relates to a server apparatus, a terminal, a thin client system, a screen transmission method and a program, and in particular to a thin client system in which a terminal such as a mobile terminal accesses a server apparatus remotely via a network such as a mobile network to operate a virtual client on the server apparatus, and to the server apparatus, the terminal, a screen transmission method and a program, in the thin client system.

BACKGROUND

In order to ensure a high level of security in enterprises and businesses, thin client systems are becoming widely used in recent years. A thin client relates to technology for operating a virtual client on a server apparatus just as if operating a real terminal, and running an application on the virtual client, to generate screen information, and also for transmitting the generated screen information to a terminal to be displayed on the terminal. A thin client has an advantage in that, since absolutely no data remains in the terminal, even if the terminal is lost, there is no risk that confidential information or business information or the like will leak to the outside.
Patent Literature 1 discloses technology with regard to a thin client system provided with a thin client terminal and a server apparatus connected via a network, in which power consumption in the client terminal is reduced by controlling clock frequency in a processor of the client terminal, giving consideration to network bandwidth.

CITATION LIST

PATENT LITERATURE

PATENT LITERATURE 1 :

Japanese Patent Kokai Publication No. JP2011-070565A

SUMMARY

TECHNICAL PROBLEM

The entire disclosed content of the abovementioned Patent Literature is incorporated herein by reference thereto. The following analysis is given according to the present inventor.
According to a thin client system in which a screen is generated by running an application on a server apparatus side, the generated screen is compressed and transmitted to a terminal, and the screen is decoded and displayed on the terminal, there is a problem in a case where the screen is always compression encoded and transmitted using an image codec irrespective of the state of the screen, in that data volume transmitted from the server apparatus to the terminal increases. In particular, where network bandwidth is narrow, there are problems such as delays occurring in transmitting data, screen updating at the terminal being slow, and reactions being slow.
Meanwhile, a method is known in which, instead of transmitting the screen itself from the server apparatus, screen drawing commands for generating the screen in question at the terminal are transmitted to the terminal from the server apparatus. According to this method, where there is little change in the screen, in comparison to the abovementioned thin client method, it is possible to reduce data volume transmitted from the server apparatus to the terminal. However, where the screen is complicated and there are major changes, since commands transmitted from the server apparatus to the terminal increase to a large extent, processing load on the terminal due to drawing the screen in question increases to a large extent in comparison to the abovementioned thin client system. At this time, there is a problem in that processing time in the terminal increases, and responsiveness deteriorates. Furthermore, there is also a problem in that the consumed power quantity increases with the increase in processing load at the terminal.
Therefore, there is a demand, in a case of fluctuation in network bandwidth between a thin client server apparatus and a client terminal, to prevent delays in screen display on the client terminal. It is an object of the present invention to provide a server apparatus, a mobile terminal, a thin client system, a screen transmission method and a program, which contribute to answering this demand.

SOLUTION TO PROBLEM

According to a first aspect of the present invention, there is provided a server apparatus, comprising: a virtual client unit that generates screen data by executing a drawing command(s) using an application software; an image encoding unit that performs compression encoding of the screen data; a drawing command encoding unit that performs compression encoding of the drawing command(s); a bandwidth measurement unit that measures a bandwidth of a network based on a response packet from a terminal connected to the server apparatus via the network for a packet transmitted to the terminal; a selection unit that selects which of the compression encoded screen data or the compression encoded drawing command(s) is to be transmitted to the terminal in accordance with the measured bandwidth; and a packet transceiver unit that transmits to the terminal the selected one of the compression encoded screen data or the compression encoded drawing command(s).

According to a second aspect of the present invention, there is provided a terminal connected via a network to a server apparatus. The server apparatus comprises: a virtual client unit that generates screen data by executing a drawing command(s) using an application software; an image encoding unit that performs compression encoding of the screen data; a drawing command encoding unit that performs compression encoding of the drawing command(s); a bandwidth measurement unit that measures a bandwidth of the network based on a response packet from a terminal connected to the server apparatus via the network for a packet transmitted to the terminal; a selection unit that selects which of the compression encoded screen data or the compression encoded drawing command(s) is to be transmitted to the terminal in accordance with the measured bandwidth; and a packet transceiver unit that transmits to the terminal the selected one of the compression encoded screen data or the compression encoded drawing command(s). The terminal comprises: an image decoding unit that decodes the compression encoded screen data; a drawing command decoder that decodes the compression encoded drawing command(s); and a screen drawing unit that generates the screen data by executing the decoded drawing command(s).

According to a third aspect of the present invention, there is provided a thin client system comprising a server apparatus, and a terminal connected via a network to the server apparatus. The server apparatus comprises: a virtual client unit that generates screen data by executing a drawing command(s) by running an application software; an image encoding unit that performs compression encoding of the screen data; a drawing command encoding unit that performs compression encoding of the drawing command(s); a bandwidth measurement unit that measures a bandwidth of the network based on a response packet from the terminal for a packet transmitted to the terminal; a selection unit that selects which of the compression encoded screen data or the compression encoded drawing command(s) is to be transmitted to the terminal in accordance with the measured bandwidth; and a packet transceiver unit that transmits to the terminal the selected one of the compression encoded screen data or the compression encoded drawing command(s). The terminal comprises: an image decoding unit that decodes the compression encoded screen data; a drawing command decoder that decodes the compression encoded drawing command(s); and a screen drawing unit that generates the screen data by executing the decoded drawing command(s).

According to a fourth aspect of the present invention, there is provided a screen transmission method, comprising: by a server apparatus, generating screen data by executing a drawing command(s) using an application software; performing compression encoding of the screen data or the drawing command(s); measuring a bandwidth of a network based on a response packet from a terminal connected to the server apparatus via the network for a packet transmitted to the terminal; selecting which of the compression encoded screen data or the compression encoded drawing command(s) is to be transmitted to the terminal in accordance with the measured bandwidth; and transmitting to the terminal the selected one of the compression encoded screen data or the compression encoded drawing command(s).

According to a fifth aspect of the present invention there is provided a program, causing a computer to execute: generating screen data by executing a drawing command(s) using an application software; performing compression encoding of the screen data or the drawing command(s); measuring a bandwidth of a network based on a response packet from a terminal connected to the server apparatus via the network, for a packet transmitted to the terminal; selecting which of the compression encoded screen data or the compression encoded drawing command(s) is to be transmitted to the terminal in accordance with the measured bandwidth; and transmitting to the terminal the selected one of the compression encoded screen data or the compression encoded drawing command(s). It is to be noted that this program may be provided as a program product recorded on a non-transitory computer-readable storage medium.

ADVANTAGEOUS EFFECTS OF INVENTION

According to the server apparatus, the mobile terminal, the thin client system, the method and the program, in accordance with the present invention, in a case of fluctuation in network bandwidth between the thin client server apparatus and the client terminal, can prevent delays in screen display on the client terminal.

BRIEF DESCRIPTION OF THE DRAWINGS

[Fig. 1]

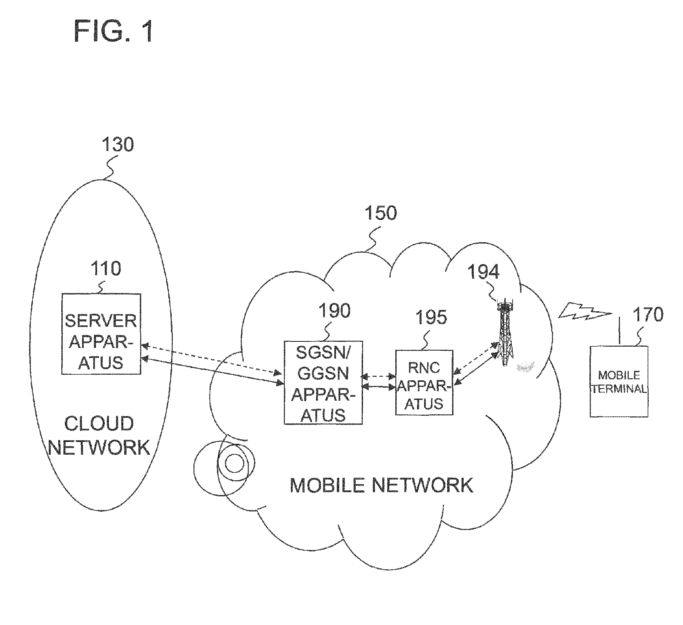

FIG. 1 is a diagram showing an example of a connection configuration of a thin client system according to a first exemplary embodiment.
[Fig. 2]

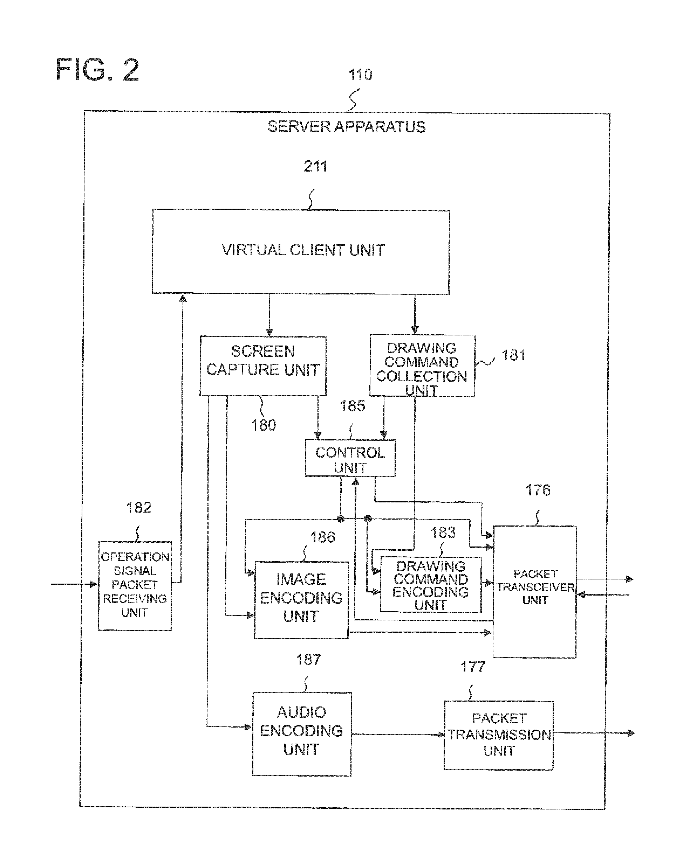

FIG. 2 is a block diagram showing an example of a configuration of a server apparatus in the thin client system according to the first exemplary embodiment.
[Fig. 3]

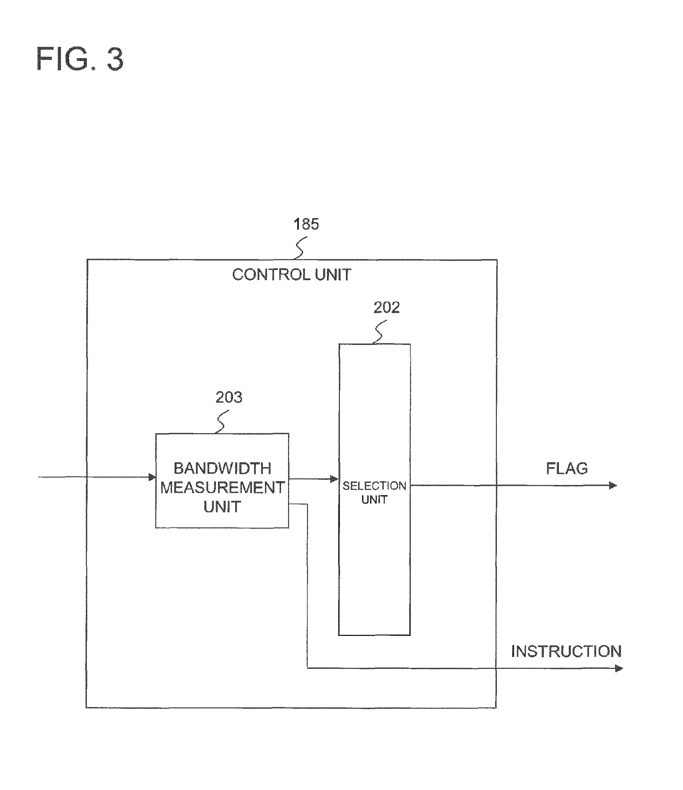

FIG. 3 is a block diagram showing an example of a configuration of a control unit included in the server apparatus in the thin client system according to the first exemplary embodiment.
[Fig. 4]

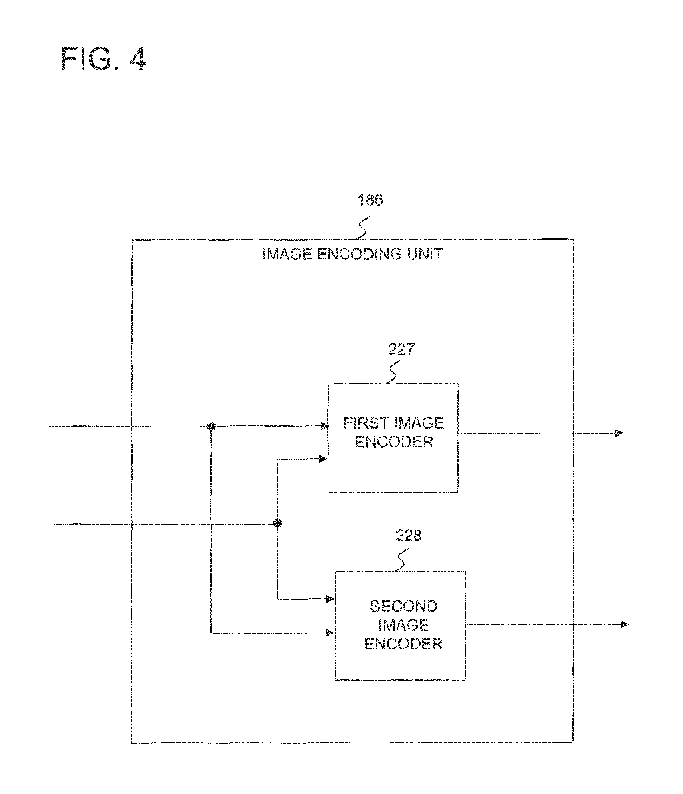

FIG. 4 is a block diagram showing an example of an image encoding unit included in the server apparatus in the thin client system according to the first exemplary embodiment.
[Fig. 5]

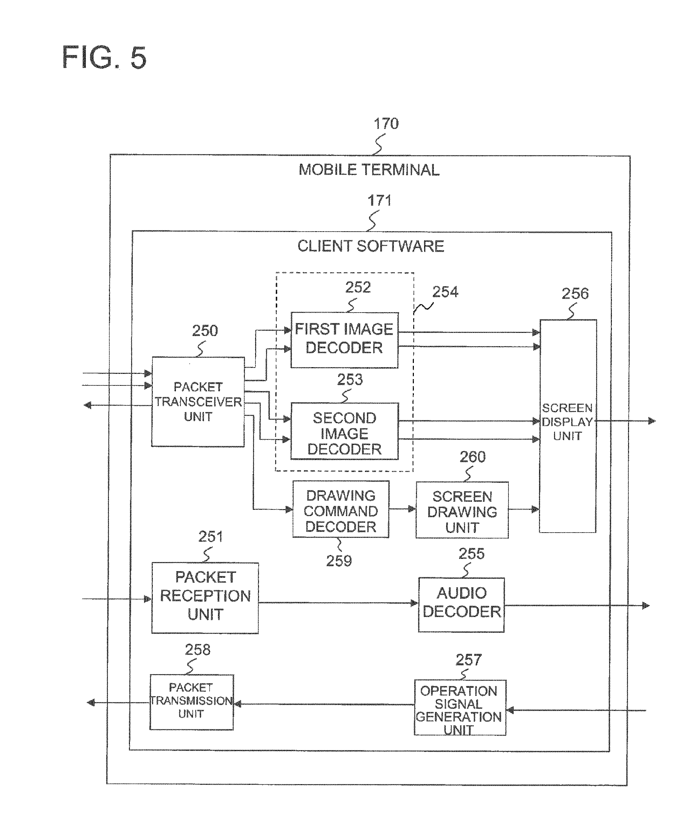

FIG. 5 is a block diagram showing an example of a configuration of client software installed in a mobile terminal in the thin client system according to the first exemplary embodiment.

DESCRIPTION OF EMBODIMENTS

First, a description is given concerning an outline of an exemplary embodiment. It is to be noted that reference symbols in the drawings attached to this outline are shown as examples in order to aid understanding, and are not intended to limit the present invention to modes illustrated in the drawings.

FIG. 1 is a diagram showing an example of a connection configuration of a thin client system according to the present invention. Referring to FIG. 1, the thin client system is provided with: a server apparatus (110) corresponding to a thin client server, and a terminal (for example, a mobile terminal 170) corresponding to a thin client terminal, which is connected to the server apparatus (110) via a network (for example, a mobile network 150).

FIG. 2 is a block diagram showing an example of a configuration of the server apparatus (110). FIG. 3 is a block diagram showing an example of a configuration of a control unit (185) contained in the server apparatus (110). Referring to FIG. 2 and FIG. 3, the server apparatus (110) comprises: a virtual client (211) unit that generates screen data by executing a drawing command(s) by running an application software; an image encoding unit (186) that performs compression encoding of the screen data; a drawing command encoding unit (183) that performs compression encoding of the drawing command(s); a bandwidth measurement unit (203) that measures a bandwidth of a network (150) based on a response packet from the terminal (170), for a packet transmitted to the terminal (170); a selection unit (202) that selects which of the compression encoded screen data or the compression encoded drawing command(s) is to be transmitted to the terminal (170) in accordance with the measured bandwidth; and a packet transceiver unit (176) that transmits to the terminal (170) the selected one of the compression encoded screen data or the compression encoded drawing command(s).

FIG. 5 is a block diagram showing an example of a configuration of client software (171) installed in the terminal (170). Referring to FIG. 5, the terminal (170) has an image decoding unit (254) that decodes compression encoded screen data, a drawing command decoder (259) that decodes compression encoded drawing command(s), and a screen drawing unit (260) that generates screen data by executing the decoded drawing command(s).

The selection unit (202) may select the compression encoded screen data when the measured bandwidth is not less than a prescribed threshold, and otherwise may select the compression encoded drawing command(s).

According to the thin client system, in a case of fluctuation in bandwidth in the network between the thin client server apparatus and the client terminal, it is possible to prevent delay in screen display on the client terminal. This is because, in a case where the network bandwidth is narrow, by transmitting the compression encoded drawing commands, which have a smaller data volume than the compression encoded screen data, to the client terminal and executing the drawing commands in the client terminal to generate the screen data, it is possible to prevent delay in screen display due to delay in data transmission.

FIG. 4 is a block diagram showing an example of a configuration of an image encoding unit (186) contained in the server apparatus (110). Referring to FIG. 4, the image encoding unit (186) comprises a first image encoder (227) that performs compression encoding of data corresponding to a first region (for example, a video region) of an image represented by the screen data, based on a first compression encoding method; and a second image encoder (228) that performs compression encoding of data corresponding to a second region (for example, a still image region) obtained by subtracting the first region from the image, based on a second compression encoding method. Referring to FIG. 5, the image decoding unit (254) of the terminal (170) may comprise a first image decoder (252) that decodes data that is compression encoded by the first image encoder (227), and a second image decoder (253) that decodes data that is compression encoded by the second image encoder (228); and the terminal (170) may comprise a screen display unit (256) that puts together the data of the first region (video region) which is decoded by the first image decoder (252) and the data of the second region (still image region) which is decoded by the second image decoder (253), and generates an image represented by the screen data.

According to the thin client system in question, in a case where a video region and a still image region are included in the image(s) represented by the screen data, compared to when all the screen data is compression encoded and transmitted from the server apparatus (110) to the terminal (170), it is possible to reduce all of: the data volume to be compression encoded in the server apparatus (110), the data volume to be transmitted from the server apparatus (110) to the terminal (170), and the data volume to be decoded in the terminal (170). Therefore, according to the thin client system, it is possible to reduce processing load and processing time in the server apparatus (110) and the terminal (170), and to reduce data transmission time.

It is to be noted that the following modes are possible in the present invention.

<First Mode>

As in the server apparatus according to the first aspect described above.

<Second Mode>

The selection unit may select the compression encoded screen data in a case where the measured bandwidth is not less than a prescribed threshold, and otherwise may select the compression encoded drawing command(s).

<Third Mode>

The response packet may include a data size of the packet transmitted from the server apparatus to the terminal and a reception time of the packet by the terminal, and the bandwidth measurement unit may measure the bandwidth of the network based on the data size and the reception time included in the response packet.

<Fourth Mode>

The image encoding unit may comprise: a first image encoder that performs compression encoding of data corresponding to a first region of an image represented by the screen data, based on a first compression encoding method; and a second image encoder that performs compression encoding of data corresponding to a second region obtained by subtracting the first region from the image, based on a second compression encoding method.

<Fifth Mode>

The first region may be a video region of the image represented by the screen data, and the second region may be a still image region of the image represented by the screen data.

<Sixth Mode>

As in the terminal according to the second aspect described above.

<Seventh Mode>

The image encoding unit may comprise a first image encoder that performs compression encoding of data corresponding to a first region of an image represented by the screen data, based on a first compression encoding method, and a second image encoder that performs compression encoding of data corresponding to a second region obtained by subtracting the first region from the image, based on a second compression encoding method. The image decoding unit may comprise a first image decoder that decodes data that is compression encoded by the first image encoder, and a second image decoder that decodes data that is compression encoded by the second image encoder. The terminal may comprise a screen display unit that puts together the data of the first region which is decoded by the first image decoder and the data of the second region which is decoded by the second image decoder, and generates an image represented by the screen data.

<Eighth Mode>

The first region may be a video region of the image represented by the screen data, and the second region may be a still image region or the image represented by the screen data.

<Ninth Mode>

As in the thin client system according to the third aspect described above.

<Tenth Mode>

The selection unit may select the compression encoded screen data in a case where the measured bandwidth is not less than a prescribed threshold, and otherwise may select the compression encoded drawing command(s).

<Eleventh Mode>

The response packet may include a data size of the packet transmitted from the server apparatus to the terminal and a reception time of the packet by the terminal, and the bandwidth measurement unit may measure the bandwidth of the network based on the data size and the reception time included in the response packet.

<Twelfth Mode>

The image encoding unit may comprise: a first image encoder that performs compression encoding of data corresponding to a first region of an image represented by the screen data, based on a first compression encoding method, and a second image encoder that performs compression encoding of data corresponding to a second region obtained by subtracting the first region from the image, based on a second compression encoding method.

<Thirteenth Mode>

The image decoding unit may comprise a first image decoder that decodes data that is compression encoded by the first image encoder, and a second image decoder that decodes data that is compression encoded by the second image encoder; and the terminal may comprise a screen display unit that puts together the data of the first region which is decoded by the first image decoder and the data of the second region which is decoded by the second image decoder, and generates an image represented by the screen data.

<Fourteenth Mode>

The first region may be a video region of the image represented by the screen data, and the second region may be a still image region of the image represented by the screen data.

<Fifteenth Mode>

As in the screen transmission method according to the fourth aspect described above.

<Sixteenth Mode>

The selecting may comprise selecting the compression encoded screen data in a case where the measured bandwidth is not less than a prescribed threshold, and otherwise selecting the compression encoded drawing command(s).

<Seventeenth Mode>

The screen transmission method may comprise: performing compression encoding of data corresponding to a first region of an image represented by the screen data, based on a first compression encoding method; and performing compression encoding of data corresponding to a second region obtained by subtracting the first region from the image, based on a second compression encoding method.

<Eighteenth Mode>

The first region may be a video region of the image represented by the screen data, and the second region may be a still image region of the image represented by the screen data.

<Nineteenth Mode>

As in the program according to the fifth aspect described above.

<Twentieth Mode>

The selecting may comprise selecting the compression encoded screen data in a case where the measured bandwidth is not less than a prescribed threshold, and otherwise selecting the compression encoded drawing command(s).

<Twenty-first Mode>

The program may cause the computer to execute: performing compression encoding of data corresponding to a first region of an image represented by the screen data, based on a first compression encoding method; and performing compression encoding of data corresponding to a second region obtained by subtracting the first region from the image, based on a second compression encoding method.

<Twenty-second Mode>

The first region may be a video region of the image represented by the screen data, and the second region may be a still image region of the image represented by the screen data.

<First Exemplary Embodiment>

A description is given of details of a configuration and operation of a thin client system according to a first exemplary embodiment, making reference to the drawings. Here, as an example of the thin client system, a description is given of a remote mobile communication system in which a mobile terminal corresponding to a thin client terminal accesses a server apparatus corresponding to a thin client server. However, application targets of the thin client system according to the present invention are not limited to the present system.

FIG. 1 shows an example of a connection configuration of the thin client system according to the present exemplary embodiment. In FIG. 1 a mobile network 150 is used to illustrate an example of a network. FIG. 1 shows a configuration of a case using a SGSN/GGSN apparatus as a packet forwarding apparatus. Here, the SGSN/GGSN apparatus is an apparatus in which an SGSN (Serving General packet radio service Support Node) apparatus and a GGSN (Gateway General packet radio service Support Node) apparatus are integrated. FIG. 1 shows, as an example, a configuration in which a thin client server apparatus 110 is disposed in a cloud network 130, and the cloud network 130 and the mobile network 150 are connected.

In FIG. 1, an end user connects the mobile terminal 170 to a virtual client of the server apparatus 110 disposed in the cloud network 130, and operates the virtual client as if operating a real terminal. In order to do this, a packet containing an operation signal (operation signal packet) is transmitted to the server apparatus 110 via a base station apparatus 194, an RNC (Radio Network Controller) apparatus 195 and an SGSN/GGSN apparatus 190 in the mobile network 150, by client software of the mobile terminal 170. Here, the operation signal is a signal transmitted from the mobile terminal 170 to the server apparatus 110 by an operation such as a key operation, a touch operation to a screen, text input, scrolling or the like, of the mobile terminal 170.

The operation signal packet transmitted from a packet transmission unit by the client software installed in the mobile terminal 170 arrives at the server apparatus 110 in the cloud network 130 via the base station apparatus 194, the RNC apparatus 195, and the SGSN/GGSN apparatus 190, provided in the mobile network 150. In this way, the server apparatus 110 receives the operation signal. An existing protocol can be used as a protocol when transmitting the operation signal. Here, as an example, UDP/IP (User Datagram Protocol/Internet Protocol) is used. However, it is also possible to use TCP/IP (Transmission Control Protocol/Internet Protocol) or the like.

FIG. 2 is a block diagram showing an example of a configuration of the server apparatus 110. Referring to FIG. 2, the server apparatus 110 is provided with an operation signal packet reception unit 182, a virtual client unit 211, a screen capture unit 180, a drawing command collection unit 181, a control unit 185, an image encoding unit 186, an audio encoding unit 187, a drawing command encoding unit 183, a packet transceiver unit 176, and a packet transmission unit 177.

The operation signal packet reception unit 182 receives a packet containing an operation signal via the base station apparatus 194, the RNC apparatus 195 and the SGSN/GGSN apparatus 190, from the mobile terminal 170. The operation signal packet reception unit 182 extracts an operation signal from a received UDP/IP packet and outputs to the virtual client unit 211.

The virtual client unit 211 has application software corresponding to each type of service, a control unit, a screen generation unit, a cache memory, and the like. Furthermore, it has a configuration to easily perform updating of the application software from outside the server apparatus 110. The virtual client unit 211 analyzes an operation signal received from the operation signal packet reception unit 182, starts up application software specified by the operation signal, generates a screen at a predetermined screen resolution, according to the application software and OS (Operating System), and outputs the generated screen to the screen capture unit 180. In addition, the virtual client unit 211 outputs drawing commands to be executed when generating/drawing the screen, to the drawing command collection unit 181.

The drawing command collection unit 181 collects a drawing command group outputted from the virtual client unit 211 for each screen, and after temporarily storing the group for each screen, outputs to the control unit 185.

The screen capture unit 180 captures and outputs the screen at a predetermined screen resolution and frame rate.

The screen capture unit 180 divides the captured screen into a plurality of blocks of a predetermined size. Here, as an example, block size is taken as being 16 pixels x 16 lines. However, it is also possible to use other sizes, for example, 8 pixels x 8 lines or 4 pixels x 4 lines. As the size of blocks becomes smaller, discriminating accuracy in the control unit 185 improves, but the amount of processing by the control unit 185 increases. The screen capture unit 180 outputs the divided blocks to the control unit 185.

FIG. 3 is a block diagram showing an example of a configuration of the control unit 185. Referring to FIG. 3, the control unit 185 has a bandwidth measurement unit 203 and a selection unit 202.

The bandwidth measurement unit 203 measures network bandwidth.

The selection unit 202 determines whether to transmit a screen or to transmit drawing commands, based on the bandwidth measurement value obtained by the bandwidth measurement unit 203.

The bandwidth measurement unit 203 gives an instruction to transmit specific packets (probe packets), to the packet transceiver unit 176 shown in FIG. 2, at predetermined timing. The packet transceiver unit 176 consecutively transmits a plurality of specified packets to the mobile terminal 170, at timing of receiving an instruction, in accordance with the instruction.

Here, the plurality of packets indicates 2 or more packets. The order of transmission is predetermined; for example, transmission may be in the order: from packets of small data size to packets of large data size. In addition, the time interval between a packet and a subsequent packet is a predetermined time interval. Here, as an example of a protocol for transmitting the packets, UDP/IP may be used. However, the protocol for transmitting the packets is not limited thereto.

The packet transceiver unit 176 receives a response packet from the mobile terminal 170. Here, the response packet, for example, includes information of data size and packet number received at or below a delay threshold at the mobile terminal 170, time of transmission from the server apparatus 110, and reception time at the mobile terminal 170.

The packet transceiver unit 176 extracts information of data size and packet number received at or below the delay threshold, time of transmission from the server apparatus 110, and reception time at the mobile terminal 170, from the received response packet, and outputs this to the bandwidth measurement unit 203 of FIG. 3.

The bandwidth measurement unit 203 receives the information of data size and packet number received at or below the delay threshold, the time of transmission from the server apparatus 110, and the reception time at the mobile terminal 170, and calculates bandwidth W of the network in accordance with equation (1).

$$D(N)/W = R(N) - R(N - 1) \qquad (1)$$

In equation (1), $D(N)$ indicates packet size of the N-th packet transmitted from the server apparatus 110. Here, data size and packet number received at or below the delay threshold at the mobile terminal 170 are inputted to N and $D(N)$, respectively. $R(N)$ indicates the time at which the N-th packet transmitted from the server apparatus 110 is received at the mobile terminal 170. Meanwhile, $R(N-1)$ indicates the time at which the (N-1)-th packet transmitted from the server apparatus 110 is received at the mobile terminal 170.

Next, the bandwidth measurement unit 203 performs time-wise smoothing of the bandwidth measurement value W based on equation (2).

$$B(n) = (1 - \beta) B (n - 1) + \beta W \qquad (2)$$

In equation (2), B(n) indicates the bandwidth measurement value after smoothing at the n-th point in time. β is a constant in a range of 0< β <1. It is to be noted that when not necessary (where there is little fluctuation in bandwidth), the bandwidth measurement unit 203 may omit time-based smoothing according to equation (2).

The packet transceiver unit 176 of FIG. 2 transmits information necessary for network bandwidth measurement to the mobile terminal 170, for example, only at a session connection time, or at a session connection time and each time interval that is predetermined based on the session connection time, and also receives a response signal from the mobile terminal 170 on a periodic basis.

The selection unit 202 of FIG. 3 receives a network bandwidth measurement value B(n) from the bandwidth measurement unit 203. In a case where the network bandwidth measurement value B(n) is not less than a predetermined threshold Th1, the selection unit 202 makes a determination to transmit a screen. In this case, with a flag F being 0, the selection unit 202 outputs the flag F to the image encoding unit 186 and the packet transceiver unit 176 of FIG. 2.

On the other hand, in a case where the bandwidth measurement value B(n) is less than the threshold Th1, the selection unit 202 makes a determination to transmit command(s). In this case, with the flag F as 1, the selection unit 202 outputs the flag F to the drawing command encoding unit 183 and the packet transceiver unit 176 of FIG. 2.

FIG. 4 is a block diagram showing an example of a configuration of the image encoding unit 186. Referring to FIG. 4, the image encoding unit 186 is provided with a first image encoder 227 and a second image encoder 228.

The first image encoder 227 receives the flag F from the control unit 185; in a case where the flag F is 0, that is, where a screen is transmitted, an image signal from the screen capture unit 180 is received, and after performing compression encoding using a predetermined video encoder, a post-compression bit stream is outputted to the packet transceiver unit 176 of FIG. 2. Here, H.264 is used as the predetermined video encoder. However, it is also possible to use another existing video codec, for example, MPEG (Moving Picture Experts Group)-4 uses HEVC (High Efficiency Video Coding) etc. Furthermore, the first image encoder 227 outputs region information of a video region to the packet transceiver unit 176 of FIG. 2.

The second image encoder 228 receives captured image(s) from the image capture unit 180, and receives the flag F from the control unit 185; when the flag F is 0, it receives a still image region range and in the case of a still image, performs compression encoding of image(s) using a still image codec, and outputs to the packet transceiver unit 176 of FIG. 2. Here, as a still image codec, the second image encoder 228 uses JPEG (Joint Photographic Experts Group) 2000. However, it is also possible to use another existing codec, for example, JPEG or the like.

The drawing command encoding unit 183 receives the flag F from the control unit 185; in a case where the flag F is 1, that is, where drawing commands are transmitted, a drawing command group from a drawing command collection unit 181 is received for each screen, lossless encoding of the drawing command group is performed according to a predetermined compression method, and the compression encoded result is outputted to the packet transceiver unit 176. Here, as the predetermined compression method, the drawing command collection unit 181 can use an existing lossless encoding method such as a Zip compression method or the like.

Next, in a case where audio accompanies a screen, an audio encoding unit 187 receives an audio signal accompanying the screen from the screen capture unit 180, the signal is compression encoded by an audio encoder, and outputted to the packet transmission unit 177 of FIG. 2. Here, as an audio encoder, the audio encoding unit 187 uses MPEG-4 AAC (Advanced Audio Coding). However, it is also possible for the audio encoding unit 187 to use another existing audio encoder.

Returning to FIG. 2, the packet transceiver unit 176 receives the flag F from the control unit 185. When the flag F is 0, the packet transceiver unit 176 receives a compression encoded bit stream from the image encoding unit 186, and when the flag is 1, receives compression encoded drawing commands from the drawing command encoding unit 183. Furthermore, the packet transceiver unit 176 stores the flag F, the compression encoded bit stream and the compression encoded drawing commands in a packet payload unit, builds a packet according to a predetermined protocol, and transmits to the SGSN/GGSN apparatus 190 of FIG. 1. Here, the packet transceiver unit 176 uses UDP/IP as a predetermined protocol. However, as an existing protocol, the packet transceiver unit 176 may use RTP (Real-time Transport Protocol)/UDP/IP, TCP/IP or the like.

Furthermore, the packet transceiver unit 176 outputs a response signal received from the mobile terminal 170 to the bandwidth measurement unit 203 of FIG. 3.

The packet transmission unit 177 stores the compression encoded bit stream for an audio signal in a packet payload, builds a packet according to a predetermined protocol, and transmits to the SGSN/GGSN apparatus 190. Here, the packet transmission unit 177 uses UDP/IP as the predetermined protocol. However, as an existing protocol, the packet transmission unit 177 may use RTP/UDP/IP, TCP/IP or the like.

The SGSN/GGSN apparatus 190 of FIG. 1 transmits packets received from the server apparatus 110 to the RNC apparatus 195 by tunneling according to a GTP-U (General packet radio service Tunneling Protocol User plane) protocol.

The RNC apparatus 195 wirelessly transmits the received packets to the mobile terminal 170 through a base station apparatus 194.

In the present exemplary embodiment, the mobile terminal 170 has client software. Along with transmitting an operation signal when a user operates the mobile terminal 170, to the server apparatus 110, the client software receives packets from the server apparatus 110, and decodes compression encoded streams to be displayed.

FIG. 5 is a block diagram showing an example of a configuration of the client software 171. Referring to FIG. 5, the client software 171 is provided with a packet transceiver unit 250, a first image decoder 252, a second image decoder 253, a drawing command decoder 259, a screen drawing unit 260, a screen display unit 256, a packet reception unit 251, an audio decoder 255, an operation signal generation unit 257, and a packet transmission unit 258.

The packet transceiver unit 250 receives a packet and extracts a flag F, a compression encoded bit stream, and compression encoded drawing command information, contained in the packet. When the flag is 0, that is, in a case where screen transmission is indicated, the packet transceiver unit 250 selects and extracts a compression encoded bit stream that has been encoded by the first image encoder 227 (FIG. 4), and outputs to the first image decoder 252. The packet transceiver unit 250 outputs a compression encoded bit stream that has been encoded by the second image encoder 228 (FIG. 4) to the second image decoder 253.

The first image decoder 252 receives the compression encoded stream, and decodes the compression encoded stream to be outputted to the screen display unit 256. The first image decoder 252 also outputs video region information to the screen display unit 256. Here, for example, an H.264 decoder is used as the first image decoder 252. However, it is also possible to use another existing screen decoder, for example, an MPEG-4 decoder or the like, as the first image decoder 252. It is to be noted that obviously the same type of encoding is used between the first image encoder 227 in the image encoding unit 186 of the server apparatus 110 and the first image decoder 252.

The second image decoder 253 receives the compression encoded stream, and decodes the compression encoded stream with respect to another region, to be outputted to the screen display unit 256. The second image decoder 253 outputs other region information to the screen display unit 256.

The screen display unit 256 receives first region information and image signals with regard to the first region from the first image decoder 252, and receives other region information and image signals with regard to the other regions, from the second image decoder 253. The screen display unit 256 uses the first region information to display output image(s) from the first image decoder 252 in the first region, and uses other region information to display output image(s) from the second image decoder 253 in the other region. In this way, the screen display unit 256 generates and outputs display screens by combining image signals of various regions.

When the flag F is 1, that is, in a case of a drawing command transmission, the packet transceiver unit 250 selects and extracts compression encoded drawing command information to be outputted to the drawing command decoder 259.

The drawing command decoder 259 performs compression decoding by a predetermined decoding method, and outputs a drawing command group for each screen to the screen drawing unit 260. Here, the drawing command decoder 259 may use a Zip method, for example, as the predetermined decoding method. However, the drawing command decoder 259 may also use another existing method as the decoding method.

The screen drawing unit 260 receives a drawing command group for each screen, draws and generates a screen, and outputs the generated screen to the screen display unit 256.

Furthermore, the packet transceiver unit 250 transmits a response signal packet with regard to a received probe packet, to the network. Here, the packet transceiver unit 250 generates a response signal as below, for example.

The packet transceiver unit 250 receives each of a plurality of probe packets transmitted from the packet transceiver unit 176 of FIG. 2, and measures delay time T(n) for each packet, based on equation (3).

$$T(n) = R(n) - S(n) \qquad (3)$$

In equation (3), T(n), R(n) and S(n) respectively indicate delay time of the n-th packet, reception time of the n-th packet, and time of transmission of the n-th packet.

The packet transceiver unit 250 calculates delay differential $\tau(n)$ between respective packets based on equation (4).

$$\tau(n) = T(n) - T(n - 1) \qquad (4)$$

In equation (4), $\tau(n)$ indicates the delay differential of the n-the packet.

Next, the packet transceiver unit 250 uses $\tau(n)$ to determine whether or not the delay differential is not less than a predetermined threshold. In a case where $\tau(n) \geq$ Th3, the packet transceiver unit 250 determines that the delay differential at the n-th packet is not less than the threshold. As a response signal, with N = n, a first packet transceiver unit 250 then stores the value of N, data size of the N-th packet, data size of the N-1-th packet, and respective reception times and transmission times, in the payload of response signal packets, to be transmitted to the server apparatus 110.

Here, the threshold Th3 may be predetermined, or may be decided in each case after referring to a numerical sequence of $\tau(n)$.

The packet transceiver unit 250 may use another method, as the method of determination. For example, the packet transceiver unit 250 may compare T(n) with the threshold, and at a point in time when it is not less than the threshold, may have n as N.

The packet reception unit 251 receives packets, extracts a compression encoded bit stream related to an audio contained in a packet, and outputs to the audio decoder 255.

The audio decoder 255 receives the compression encoded stream, performs decoding, and then outputs the result in synchronization with a screen portion. MPEG-4 AAC may be used, for example, for the audio decoder 255. However, another existing audio decoder may also be used as the audio decoder 255. It is to be noted that obviously the same type of encoding is used between the audio encoder in the audio encoding unit 187 of the server apparatus 110, and the audio decoder 255.

The operation signal generation unit 257 detects operations inputted by a user to the mobile terminal 170, for example, screen touch, screen scroll, icon touch, text input and the like, generates operation signals for each thereof, and outputs to the packet transmission unit 258.

The packet transmission unit 258 receives the operation signals, stores them in packets according to a predetermined protocol, and outputs to the network. The packet transmission unit 258 can use TCP/IP, UDP/IP or the like, as the predetermined protocol. However, the protocol used by the packet transmission unit 258 is not limited thereto.

Various modifications of the thin client system according to the present exemplary embodiment are possible.

It is possible to use another existing method as the method of measuring bandwidth in the bandwidth measurement unit 203. As timing for network bandwidth measurement, it is possible to preform measurement once at session connection time, by transmitting a probe packet. On the other hand, it is also possible to transmit a probe packet at a session connection time, and thereafter to perform measurement while transmitting probe packets at predetermined time intervals until a session is disconnected. In a case where network bandwidth fluctuates temporally, it is possible to follow the temporal fluctuations of the bandwidth by the latter method.

It is possible to use another existing method as a method of making a determination in the selection unit 202.

As the mobile network 150 as shown in FIG. 1, an LTE/EPC (Long Term Evolution/Evolved Packet Core) network may be used. As the mobile network 150, a WiMax (Worldwide Interoperability for Microwave Access) network or a WiFi (Wireless Fidelity) network may be used. As the mobile network 150, it is also possible to use a fixed network, an NGN (Next Generation Network) network, or the Internet. Note that in this case, connection is from a fixed terminal or a PC (Personal Computer), rather than the mobile terminal 170.

In FIG. 1, the server apparatus 110 is disposed in a cloud network 130, but it may also be disposed in the Internet. In a case of having the thin client server in an enterprise, it is possible to dispose the server apparatus 110 in an enterprise network. As another configuration, in a case where a telecommunications carrier itself arranges the thin client server, it is also possible to dispose the sever apparatus 110 in the mobile network 150, in a fixed network or in an NGN network.

According to the present invention, in a case of using a thin client via a network, probe packet(s) is transmitted from a server apparatus side, network bandwidth is measured, a determination is made as to whether to transmit a screen or to transmit drawing commands based on the measured value, and these are switched and transmission performed. Therefore, it is possible to have a balance with regard to data volume, network delay amount, and load amount at a terminal. In this way, in the thin client system, it is possible to prevent a large increase in data volume, a large delay in response time, and a large increase in processing load at a terminal.

It is to be noted that the various disclosures of the abovementioned patent literature are incorporated herein by reference thereto. Modifications and adjustments of exemplary embodiments are possible within the bounds of the entire disclosure (including the scope of the claims) of the present invention, and also based on fundamental technological concepts thereof. Furthermore, various combinations and selections of various disclosed elements (including respective elements of the respective claims, respective elements of the respective exemplary embodiments, respective elements of the respective drawings, and the like) are possible within the scope of the claims of the present invention. That is, the present invention clearly includes every type of transformation and modification that a person skilled in the art can realize according to the entire disclosure including the scope of the claims and to technological concepts thereof. In particular, with regard to numerical ranges described in the present specification, arbitrary small ranges and numerical values included in the relevant ranges should be interpreted to be specifically described even where there is no particular description thereof.

REFERENCE SIGNS LIST

110     server apparatus
130     cloud network
150     mobile network
170     mobile terminal
171     client software
176     packet transceiver unit
177     packet transmission unit
180     screen capture unit
181     drawing command collection unit
182     operation signal packet receiving unit
183     drawing command encoding unit
185     control unit
186     image encoding unit
187     audio encoding unit
190     SGSN/GGSN apparatus
194     base station apparatus
195     RNC apparatus
202     selection unit
203     bandwidth measurement unit
211     virtual client unit
227     first image encoder
228     second image encoder
250     packet transceiver unit
251     packet reception unit
252     first image decoder
253     second image decoder
254     image decoding unit
255     audio decoder
256     screen display unit
257     operation signal generation unit
258     packet transmission unit
259     drawing command decoder
260     screen drawing unit

**Claims**

1.  A server apparatus, comprising:

     a virtual client unit that generates screen data by executing a drawing command(s) using an application software;
     an image encoding unit that performs compression encoding of the screen data;
     a drawing command encoding unit that performs compression encoding of the drawing command(s);
     a bandwidth measurement unit that measures a bandwidth of a network based on a response packet from a terminal connected to the server apparatus via the network for a packet transmitted to the terminal;
     a selection unit that selects which of the compression encoded screen data or the compression encoded drawing command(s) is to be transmitted to the terminal in accordance with the measured bandwidth; and
     a packet transceiver unit that transmits to the terminal the selected one of the compression encoded screen data or the compression encoded drawing command(s).

2.  The server apparatus according to claim 1, wherein
     the selection unit selects the compression encoded screen data in a case where the measured bandwidth is not less than a prescribed threshold, and otherwise selects the compression encoded drawing command(s).

**3.** The server apparatus according to claim 1 or 2, wherein
the response packet includes a data size of the packet transmitted from the server apparatus to the terminal and a reception time of the packet by the terminal, and
the bandwidth measurement unit measures the bandwidth of the network based on the data size and the reception time included in the response packet.

**4.** The server apparatus according to any one of claims 1 to 3, wherein
the image encoding unit comprises:

a first image encoder that performs compression encoding of data corresponding to a first region of an image represented by the screen data, based on a first compression encoding method; and
a second image encoder that performs compression encoding of data corresponding to a second region obtained by subtracting the first region from the image, based on a second compression encoding method.

**5.** The server apparatus according to claim 4, wherein
the first region is a video region of the image represented by the screen data, and
the second region is a still image region of the image represented by the screen data.

**6.** A terminal connected via a network to a server apparatus, wherein the server apparatus comprises:

a virtual client unit that generates screen data by executing a drawing command(s) using an application software;
an image encoding unit that performs compression encoding of the screen data;
a drawing command encoding unit that performs compression encoding of the drawing command(s);
a bandwidth measurement unit that measures a bandwidth of the network based on a response packet from a terminal connected to the server apparatus via the network for a packet transmitted to the terminal;
a selection unit that selects which of the compression encoded screen data or the compression encoded drawing command(s) is to be transmitted to the terminal in accordance with the measured bandwidth; and
a packet transceiver unit that transmits to the terminal the selected one of the compression encoded screen data or the compression encoded drawing command(s), and
the terminal comprises:

an image decoding unit that decodes the compression encoded screen data;
a drawing command decoder that decodes the compression encoded drawing command(s); and
a screen drawing unit that generates the screen data by executing the decoded drawing command(s).

**7.** The terminal according to claim 6, wherein
the image encoding unit comprises:

a first image encoder that performs compression encoding of data corresponding to a first region of an image represented by the screen data, based on a first compression encoding method; and
a second image encoder that performs compression encoding of data corresponding to a second region obtained by subtracting the first region from the image, based on a second compression encoding method;

the image decoding unit comprises:

a first image decoder that decodes data that is compression encoded by the first image encoder; and
a second image decoder that decodes data that is compression encoded by the second image encoder, and
the terminal comprises: a screen display unit that puts together data of the first region which is decoded by the first image decoder and data of the second region which is decoded by the second image decoder, and generates an image represented by the screen data.

**8.** The terminal according to claim 7, wherein
the first region is a video region of the image represented by the screen data, and
the second region is a still image region of the image represented by the screen data.

**9.** A thin client system comprising:

a server apparatus; and

a terminal connected via a network to the server apparatus, wherein

the server apparatus comprises:

a virtual client unit that generates screen data by executing a drawing command(s) by running an application software;

an image encoding unit that performs compression encoding of the screen data;

a drawing command encoding unit that performs compression encoding of the drawing command(s);

a bandwidth measurement unit that measures a bandwidth of the network based on a response packet from the terminal for a packet transmitted to the terminal;

a selection unit that selects which of the compression encoded screen data or the compression encoded drawing command(s) is to be transmitted to the terminal in accordance with the measured bandwidth; and

a packet transceiver unit that transmits to the terminal the selected one of the compression encoded screen data or the compression encoded drawing command(s), and

the terminal comprises:

an image decoding unit that decodes the compression encoded screen data;

a drawing command decoder that decodes the compression encoded drawing command(s); and

a screen drawing unit that generates the screen data by executing the decoded drawing command(s).

10. A screen transmission method, comprising:

by a server apparatus, generating screen data by executing a drawing command(s) using an application software;

performing compression encoding of the screen data or the drawing command(s);

measuring a bandwidth of a network based on a response packet from a terminal connected to the server apparatus via the network for a packet transmitted to the terminal;

selecting which of the compression encoded screen data or the compression encoded drawing command(s) is to be transmitted to the terminal in accordance with the measured bandwidth; and

transmitting to the terminal the selected one of the compression encoded screen data or the compression encoded drawing command(s).

11. The screen transmission method according to claim 10, wherein

the selecting comprises selecting the compression encoded screen data in a case where the measured bandwidth is not less than a prescribed threshold, and otherwise selecting the compression encoded drawing command(s).

12. The screen transmission method according to claim 10 or 11, comprising:

performing compression encoding of data corresponding to a first region of an image represented by the screen data, based on a first compression encoding method; and

performing compression encoding of data corresponding to a second region obtained by subtracting the first region from the image, based on a second compression encoding method.

13. The screen transmission method according to claim 12, wherein

the first region is a video region of the image represented by the screen data, and

the second region is a still image region of the image represented by the screen data.

14. A program, causing a computer to execute:

generating screen data by executing a drawing command(s) using an application software;

performing compression encoding of the screen data or the drawing command(s);

measuring a bandwidth of a network based on a response packet from a terminal connected to the server apparatus via the network, for a packet transmitted to the terminal;

selecting which of the compression encoded screen data or the compression encoded drawing command(s) is to be transmitted to the terminal in accordance with the measured bandwidth; and

transmitting to the terminal the selected one of the compression encoded screen data or the compression encoded drawing command(s).

**15.** The program according to claim 14, wherein
the selecting comprises selecting the compression encoded screen data in a case where the measured bandwidth is not less than a prescribed threshold, and otherwise selecting the compression encoded drawing command(s).

**16.** The program according to claim 14 or 15, causing the computer to execute:

performing compression encoding of data corresponding to a first region of an image represented by the screen data, based on a first compression encoding method; and
performing compression encoding of data corresponding to a second region obtained by subtracting the first region from the image, based on a second compression encoding method.

**17.** The program according to claim 16, wherein
the first region is a video region of the image represented by the screen data, and
the second region is a still image region of the image represented by the screen data.

# FIG. 1

130

150

110

194

190

195

170

SERVER
APPAR-
ATUS

SGSN/
GGSN
APPAR-
ATUS

RNC
APPAR-
ATUS

MOBILE
TERMINAL

CLOUD
NETWORK

MOBILE NETWORK

# FIG. 2

110

**SERVER APPARATUS**

211

**VIRTUAL CLIENT UNIT**

**SCREEN CAPTURE UNIT**

180

**DRAWING COMMAND COLLECTION UNIT** 181

185

**CONTROL UNIT**

176

182

**OPERATION SIGNAL PACKET RECEIVING UNIT**

186

**IMAGE ENCODING UNIT**

183

**DRAWING COMMAND ENCODING UNIT**

**PACKET TRANSCEIVER UNIT**

187

**AUDIO ENCODING UNIT**

177

**PACKET TRANSMISSION UNIT**

17

# FIG. 3

# FIG. 4

186

IMAGE ENCODING UNIT

227

FIRST IMAGE ENCODER

228

SECOND IMAGE ENCODER

FIG. 5

170

MOBILE TERMINAL

171

CLIENT SOFTWARE

252

254

256

FIRST IMAGE DECODER

250

253

PACKET TRANSCEIVER UNIT

SECOND IMAGE DECODER

SCREEN DISPLAY UNIT

260

DRAWING COMMAND DECODER

SCREEN DRAWING UNIT

251

259

255

PACKET RECEPTION UNIT

AUDIO DECODER

258

257

PACKET TRANSMISSION UNIT

OPERATION SIGNAL GENERATION UNIT

**INTERNATIONAL SEARCH REPORT**

| International application No. |
|---|
| PCT/JP2013/080762 |

A. CLASSIFICATION OF SUBJECT MATTER
*H04N21/238*(2011.01)i, *H04N21/236*(2011.01)i, *H04N21/24*(2011.01)i

According to International Patent Classification (IPC) or to both national classification and IPC

B. FIELDS SEARCHED

Minimum documentation searched (classification system followed by classification symbols)
H04N21/238, H04N21/236, H04N21/24

Documentation searched other than minimum documentation to the extent that such documents are included in the fields searched
Jitsuyo Shinan Koho 1922–1996 Jitsuyo Shinan Toroku Koho 1996–2013
Kokai Jitsuyo Shinan Koho 1971–2013 Toroku Jitsuyo Shinan Koho 1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-250615 A (Casio Computer Co., Ltd.), 04 November 2010 (04.11.2010), paragraph [0010] (Family: none) | 1-17 |
| A | JP 2010-087950 A (NEC Personal Products, Ltd.), 15 April 2010 (15.04.2010), paragraph [0010] (Family: none) | 1-17 |
| A | JP 2010-237726 A (NEC Personal Products, Ltd.), 21 October 2010 (21.10.2010), paragraph [0042] (Family: none) | 1-17 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 December, 2013 (03.12.13) | 17 December, 2013 (17.12.13) |

| Name and mailing address of the ISA/ Japanese Patent Office | Authorized officer |
|---|---|
| Facsimile No. | Telephone No. |

Form PCT/ISA/210 (second sheet) (July 2009)

**EP 2 922 300 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012250887 A
- JP 2011070565 A